# EUROPEAN PATENT APPLICATION

(11) **EP 3 206 116 A1**
(43) Date of publication of application: **16.08.2017**
(21) Application number: 15849359.3
(22) Date of filing: 07.10.2015
(51) Int. Cl.: G06F 3/0482, G06F 3/14, H04Q 9/00

(54) **REMOTE CONTROL SYSTEM, MAINTENANCE TERMINAL, OPERATION TERMINAL, AND REMOTE CONTROL METHOD**

(30) Priority: 08.10.2014 JP 2014207072
(71) Applicant: Mitsubishi Electric Corporation, Chiyoda-ku Tokyo 100-8310 (JP)
(72) Inventor: CHOTOKU, Norihiro, Tokyo 100-0006 (JP); WATANABE, Akihiko, Tokyo 100-0006 (JP); OZAWA, Masafumi, Tokyo 100-0006 (JP); INOUE, Jun, Tokyo 100-8310 (JP); KAWASAKI, Jin, Tokyo 100-8310 (JP); TANIGAWA, Kozo, Kobe-shi, Hyogo 652-8555 (JP)
(74) Representative: Pfenning, Meinig & Partner mbB
(86) International application number: PCT/JP2015/078468
(87) International publication number: WO 2016/056588

(57) **Abstract**

An object of this invention is to obtain a remote control system with which the visibility and operability of a maintenance application screen serving as an operation subject can be improved when a maintenance terminal is operated remotely from an operating terminal. The maintenance terminal includes a screen specifying unit that specifies, in accordance with a definition from a display/operation subject screen setting unit, a single operation subject screen from respective application screens displayed on a screen of the maintenance terminal, and a screen information generating unit that extracts screen components and component conditions thereof from the operation subject screen specified by the screen specifying unit, generates screen layout information on the basis of the screen components and the component conditions, and transmits the generated screen layout information to the operating terminal, and the operating terminal includes an operation/display unit that displays the screen components on a screen of the operating terminal on the basis of the screen layout information, monitors the screen components to detect an operation performed thereon, and when an operation is performed thereon, generates screen operation event information and transmits the generated screen operation event information to the maintenance terminal.

## Description

### Technical Field

This invention relates to a remote control system and a remote control method with which a screen of a maintenance terminal is transmitted to and displayed on an operating terminal, and the maintenance terminal is operated on the basis of a screen operation event received from the operating terminal.

### Background Art

When a user using a maintenance terminal (a laptop PC) wishes to use the maintenance terminal while holding a component in one hand during maintenance work or the like, the user can avoid operation limitations by operating the maintenance terminal remotely using a smartphone that can be operated with one hand as an operating terminal while leaving the maintenance terminal in a remote location. In another method, a small terminal capable of communication by wireless LAN, Bluetooth (registered trademark), or the like may be used instead of a smartphone.

In a remote desktop method for operating a laptop PC remotely from a smartphone, a PC screen is transmitted to and displayed on a screen of a smartphone, and by converting a touch panel operation (a screen operation event) performed on the smartphone into operation input relating to the laptop PC, the PC screen can be displayed and manipulated from the screen of the smartphone.

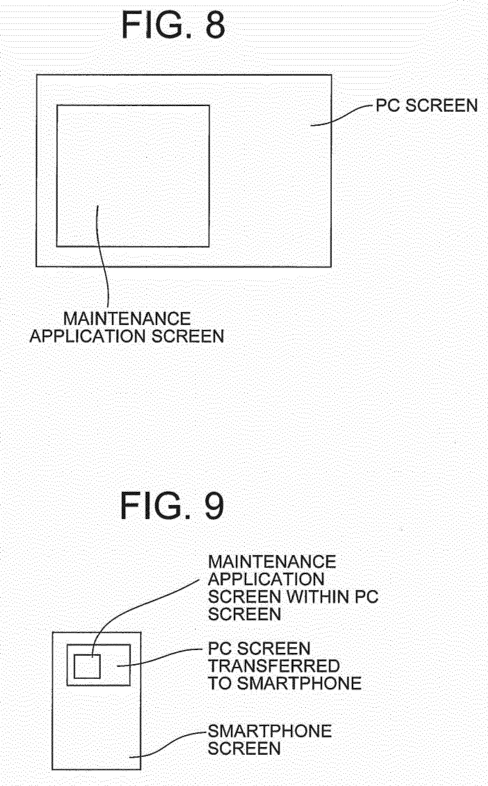

With this method, however, when a relatively large PC screen (full HD 11.6 inch liquid crystal) such as that shown in Fig. 8 is transmitted to and displayed on a small smartphone screen (720 x 1280 4.3 inch liquid crystal) such as that shown in Fig. 9, a maintenance application screen serving as an operation subject decreases in size such that the visibility and operability thereof are poor.

Note that even when the smartphone screen is enlarged and a scroll bar is added in order to increase the display size, the scroll bar must be operated in order to display a predetermined region of the maintenance application screen, and therefore the operability remains poor.

Here, a technique of connecting a main device and a terminal device communicably, extracting a part of the screen of the main device, and displaying the extracted part on the terminal device has been proposed (see PTL 1 and PTL 2, for example). A technique of generating a smartphone layout in order to operate an application running on a PC remotely from a smartphone has also been proposed (see PTL 3, for example).

### Citation List

### Patent Literature

[PTL 1] Japanese Patent Application Publication No. 2014-10568
[PTL 2] Japanese Patent Application Publication No. 2013-145565
[PTL 3] Japanese Patent Application Publication No. 2013-235438

### Summary of Invention

### Technical Problem

However, the prior art includes the following problem.
PTL 3 discloses a technique of generating a smartphone layout in order to operate a PC remotely from a smartphone, but does not disclose any matter relating to a method of specifying an operation subject application screen.

Therefore, even when the techniques disclosed in PTL 1 and PTL 2 are employed to extract a part of the screen of the main device and display the extracted part on the terminal device, the maintenance application screen serving as the operation subject cannot be displayed appropriately on the smartphone, and as a result, the visibility and operability are poor.

This invention has been designed to solve the problem described above, and an object thereof is to obtain a remote control system with which the visibility and operability of a maintenance application screen serving as an operation subject can be improved when a maintenance terminal is operated remotely from an operating terminal.

### Solution to Problem

In a remote control system according to this invention, in which a screen of a maintenance terminal is transmitted to and displayed on an operating terminal and the maintenance terminal is operated on the basis of a screen operation event received from the operating terminal, the maintenance terminal includes a screen specifying unit that specifies, in accordance with a definition from a display/operation subject screen setting unit, a single operation subject screen from respective application screens displayed on the screen of the maintenance terminal, and a screen information generating unit that extracts screen components and component conditions thereof from the operation subject screen specified by the screen specifying unit, generates screen layout information on the basis of the screen components and the component conditions, and transmits the generated screen layout information to the operating terminal, and the operating terminal includes an operation/display unit that displays the screen components on a screen of the operating terminal on the basis of the screen layout information, monitors the screen components to detect an operation performed thereon, and when an operation is performed thereon, generates screen operation event information and transmits the generated screen operation event information to the maintenance terminal.

### Advantageous Effects of Invention

The remote control system according to this invention includes the screen specifying unit that specifies, in accordance with the definition from the display/operation subject screen setting unit, a single operation subject screen from the respective application screens displayed on the screen of the maintenance terminal, the screen information generating unit that extracts screen components and component conditions thereof from the operation subject screen specified by the screen specifying unit, generates the screen layout information on the basis of the screen components and the component conditions, and transmits the generated screen layout information to the operating terminal, and the operation/display unit that displays the screen components on the screen of the operating terminal on the basis of the screen layout information, monitors the screen components to detect an operation performed thereon, and when an operation is performed thereon, generates the screen operation event information and transmits the generated screen operation event information to the maintenance terminal.

Hence, when the maintenance terminal is operated remotely from the operating terminal, the visibility and operability of the maintenance application screen serving as the operation subject can be improved.

### Brief Description of Drawings

Fig. 1 is an illustrative view showing a condition in which a plurality of maintenance application screens and a single non-maintenance application screen are displayed on a screen of a maintenance terminal.
Fig. 2 is an illustrative view showing a single maintenance application screen.
Fig. 3 is an illustrative view showing a condition in which screen components extracted from the maintenance application screen are displayed on a screen of an operating terminal.
Fig. 4 is a block diagram showing a configuration of a remote control system according to a first embodiment of this invention.
Fig. 5 is an illustrative view showing a condition in which a list of window titles and thumbnails of corresponding screens are displayed on the screen of the operating terminal.
Fig. 6 is a flowchart showing processing executed by the maintenance terminal of the remote control system according to the first embodiment of this invention.
Fig. 7 is a flowchart showing processing executed by the operating terminal of the remote control system according to the first embodiment of this invention.
Fig. 8 is an illustrative view showing a condition in which a maintenance application screen is displayed on a PC screen according to the prior art.
Fig. 9 is an illustrative view showing a condition in which the PC screen shown in Fig. 8 is transmitted to and displayed on a smartphone screen.

### Description of Embodiments

A preferred embodiment of a remote control system according to this invention will be described below using the drawings. Note that identical or corresponding parts of the drawings will be described using identical reference numerals.

### First Embodiment

First, an outline of this invention will be described. In this invention, a maintenance terminal can be operated from an operating terminal by specifying a single operation subject application screen from a plurality of application screens displayed on the maintenance terminal, extracting operation subject screen components and conditions thereof from the screen and transmitting the extracted screen components and conditions to the operating terminal such that the extracted screen components and conditions are displayed thereon, and transmitting an operation performed on one of the screen components extracted from the application screen and displayed on the operating terminal to the maintenance terminal as screen operation event information such that the operation is performed on the application screen of the maintenance terminal.

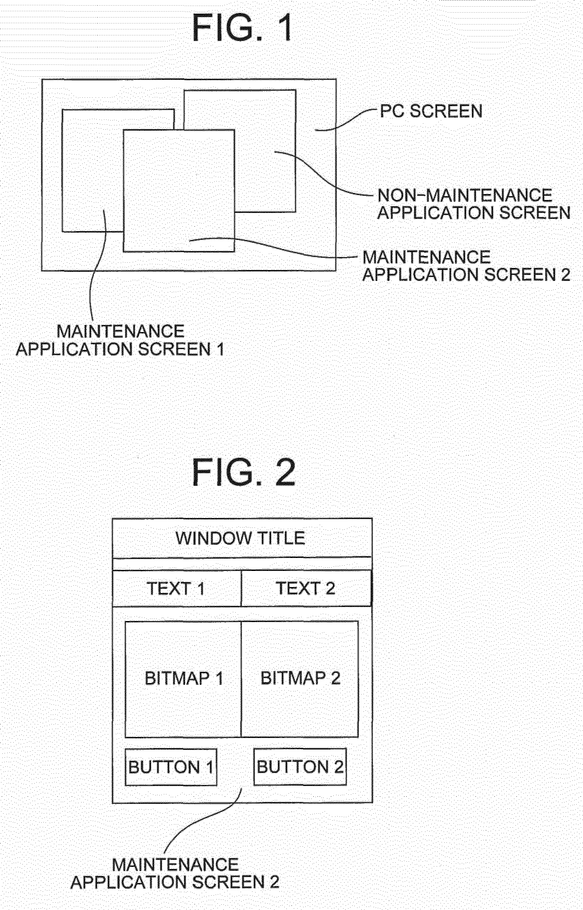

Here, a method of specifying a single operation subject application screen will be described. As shown in Fig. 1, of the application screens displayed on the maintenance terminal, maintenance application screens 1 and 2 are screens that may be operated remotely from the operating terminal, while a non-maintenance application screen is not operated remotely.

In this invention, the maintenance application screens 1 and 2 are defined as display/operation subject screens among the application screens displayed on the maintenance terminal, the display on the maintenance terminal is monitored, and when a newly displayed application screen corresponds to one of the display/operation subject screens, a single operation subject application screen is selected.

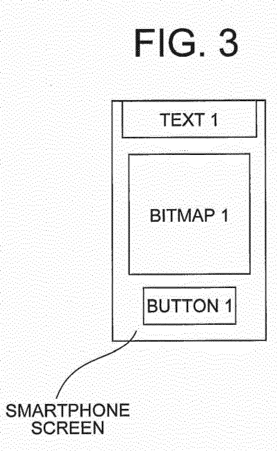

Next, a method of extracting operation subject screen components and conditions thereof will be described. As shown in Fig. 2, the specified maintenance application screen 2 includes a window title, text 1, text 2, a bitmap 1, a bitmap 2, a button 1, and a button 2 as screen components. At this time, as shown in Fig. 3, only the text 1, the bitmap 1, and the button 1, which are required to perform an operation on the maintenance application screen 2, are displayed on the screen of the operating terminal.

In this invention, a screen layout to be displayed on the operating terminal is defined from among the screen components of each maintenance application screen, whereupon selected screen components are extracted/arranged in accordance with the screen layout and displayed in place of screen components displayed on the operating terminal.

Next, a method of performing an operation on the application screen of the maintenance terminal will be described. In this invention, an identical operation is executed on an identical screen component of the maintenance terminal on the basis of the screen operation event information received from the operating terminal.

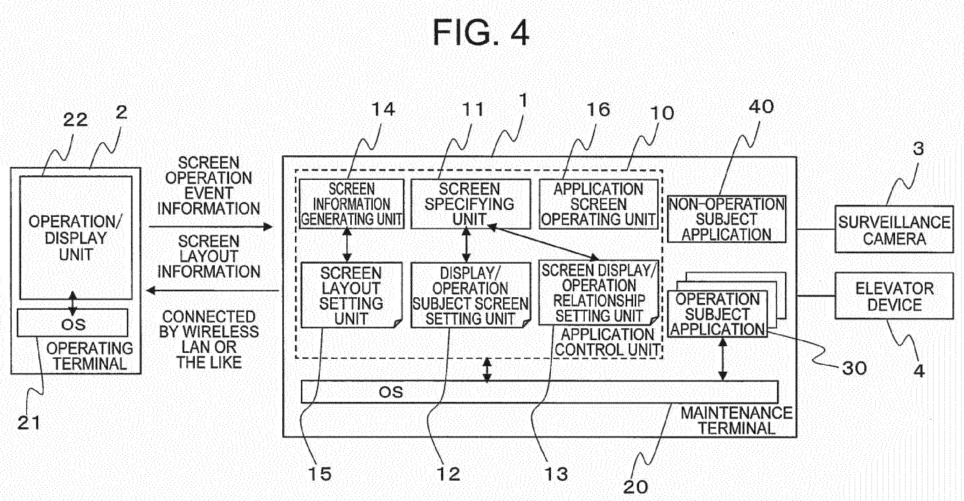

A remote control system according to a first embodiment of this invention will now be described on the basis of a block diagram shown in Fig. 4. In Fig. 4, the remote control system includes a maintenance terminal 1 constituted by a laptop PC and an operating terminal 2 constituted by a smartphone, for example. Note that the maintenance terminal 1 and the operating terminal 2 are connected by a wireless LAN or the like. Further, an elevator surveillance camera 3 and an elevator device 4 are connected to the maintenance terminal 1.

In the maintenance terminal 1, an application control unit 10 obtains application screen content of an operation subject application 30 that is displayed via an OS (operating system) 20, whereupon operations are performed on the operation subject application 30 while processing is not performed in relation to a non-operation subject application 40.

In the operating terminal 2, a screen transmitted from the maintenance terminal 1 is displayed by an operation/display unit 22 via an OS 21, and screen operation event information form the operation/display unit 22 is transmitted to the maintenance terminal 1.

The application control unit 10 includes a screen specifying unit 11, a display/operation subject screen setting unit 12, a screen display/operation relationship setting unit 13, a screen information generating unit 14, a screen layout setting unit 15, and an application screen operating unit 16.

The screen specifying unit 11 of the maintenance terminal 1 specifies a single operation subject screen from the respective application screens displayed on the maintenance terminal 1 in accordance with a definition from the display/operation subject screen setting unit 12. Here, screen properties and screen identifiers are set in advance in the display/operation subject screen setting unit 12 as follows as the definition used by the screen specifying unit 11 to specify a screen.

### Example of setting performed by display/operation subject screen setting unit 12

1) Window title | window display process (application) name | screen identifier
2) Window title | number of screen components in window | screen identifier

More specifically, the screen specifying unit 11 obtains properties of the respective application screens displayed on the screen from the OS 20, and compares the obtained properties with the properties within the definition set by the display/operation subject screen setting unit 12. When matching properties are detected, the screen specifying unit 11 specifies the corresponding screen identifier as the operation subject screen, and obtains a screen ID of the screen from the OS 20. Note that the screen ID is an ID for identifying the screen uniquely while the OS 20 is operative, and in the case of Windows (registered trademark), for example, the window handle corresponds to the screen ID.

Further, an operation executed on the current operation subject application screen and the screen identifier of a following operation subject that results from the operation are set in advance as follows in the screen display/operation relationship setting unit 13 as the definition used by the screen specifying unit 11 to specify a screen.

### Example of setting performed by screen display/operation relationship setting unit 13

### 1) Operation subject screen identifier | operation content | identifier of following operation subject screen

Here, the operation content denotes an operation such as pressing button A, pressing button B, and selecting check box A, for example, and as a result of these operations, either the operation subject screen is switched or a newly displayed operation is defined.

At this time, the screen specifying unit 11 compares the operation content with the definition from the screen display/operation relationship setting unit 13, and when the operation content indicated by the operation subject screen identifier matching the specified operation subject screen matches the content of an operation performed on the operating terminal 2, the screen identifier of the following operation subject screen is selected as an operation subject screen candidate. In other words, the screen specifying unit 11 determines that the candidate screen has been displayed on the basis of the definition from the display/operation subject screen setting unit 12.

The screen information generating unit 14 of the maintenance terminal 1 generates screen layout information to be transmitted to the operating terminal 2 in accordance with a definition from the screen layout setting unit 15 using the screen identifier and the screen ID (the window handle, for example) specified by the screen specifying unit 11. More specifically, first, the screen information generating unit 14 obtains the properties (the window title, screen components, and component conditions) of the operation subject application screen from the screen ID. The screen components and the component conditions may be set as follows.

### Examples of screen components | component conditions

1) Button | component ID, button title, button pressing ability, button depression condition
2) Check box | component ID, name of displayed item, name of selected item
3) List box | component ID, name of displayed item, name of selected item
4) Text | component ID, displayed character string, color of character string
5) Bitmap | component ID, displayed bitmap data

The screen layout setting unit 15 sets information for specifying the screen components to be displayed on the operating terminal 2 in relation to the screen identifier in advance as follows.

### Example of setting performed by screen layout setting unit 15

### 1) Screen identifier | information for specifying screen component to be displayed | information for specifying screen component to be displayed | ...

Here, the information for specifying the screen components to be displayed may be set as follows.

### Examples of screen components | information for specifying screen components

1) Button A | button title
2) List box | name of displayed item
3) Check box | name of displayed item
4) Text A | displayed character string
5) Bitmap | coordinates of screen region

Next, the screen information generating unit 14 generates the screen layout information as follows by selecting screen components that match the screen components of the screen identifier set by the screen layout setting unit 15 and the information for specifying the screen components on the basis of the screen components and the component conditions of the operation subject application screen.

### Examples of screen layout information

1) Button A | component ID | button title, button pressing ability, button depression condition
2) Button B | component ID | button title, button pressing ability, button depression condition
3) Text A | component ID | character string, color of character string
4) Bitmap A | component ID | bitmap data

After transmitting the screen layout information to the operating terminal 2, the screen information generating unit 14 monitors the operation subject application 30 to detect screen changes therein, and when a change occurs, the screen information generating unit 14 generates new screen layout information and transmits the new screen layout information to the operating terminal 2.

For example, when an image captured by the surveillance camera 3 is displayed on the maintenance terminal 1, the screen information generating unit 14 can display image changes on the screen of the operating terminal 2 in order to determine that the surveillance camera 3 is operating normally. The screen information generating unit 14 can also display screen changes on the screen of the operating terminal 2 in relation to changes in a numerical value such as an elevator floor display, changes in a banner character string or the like, changes on a graph, and so on.

The operation/display unit 22 of the operating terminal 2, having received the screen layout information, displays the respective screen components on the screen of the operating terminal 2 on the basis of the screen layout information. With respect to button A, for example, a button is created in accordance with the button title, pressing ability, and depression condition described in the screen layout information, and disposed on the screen. Further, the check box, list box, text, and bitmap are created and disposed on the screen in an identical manner.

The layout of these screen components may be determined in accordance with features of the operating terminal 2. For example, the screen components may be enlarged so as to be easier to see on a small screen, the screen components may be enlarged so as to be easier to manipulate using a small touch panel, and so on. The bitmap may be either resized in accordance with the screen size of the operating terminal, or displayed at an identical size and provided with a scroll bar.

Further, after displaying the screen components on the screen of the operating terminal 2, the operation/display unit 22 monitors the respective screen components to detect an operation performed thereon, and when an operation is performed thereon, the operation/display unit 22 generates the screen operation event information as follows and transmits the generated information to the maintenance terminal 1. At this time, the component IDs received with respect to the respective screen components are used as is in the response.

### Examples of screen operation event information

1) Button A | component ID | button pressed
2) Check box A | component ID | item selected
3) List box A | component ID | item selected
4) Bitmap A | component ID | click coordinates

The application screen operating unit 16 of the maintenance terminal 1 executes an operation on the operation subject application screen on the basis of the received screen operation event information. For example, after receiving screen operation event information relating to button A, the application screen operating unit 16 specifies the corresponding screen component on the application screen from the component ID, and executes a button pressing operation in relation to the corresponding screen component.

Note that although the screen specifying unit 11 specifies a single operation subject screen from the respective application screens displayed on the maintenance terminal 1, the operation subject application 30 does not run immediately after the OS 20 is activated, and therefore no operation subject application screens are displayed. Hence, when no operation subject application screens are displayed, the screen specifying unit 11 outputs an initial screen generation instruction to the screen information generating unit 14. The screen information generating unit 14 then transmits a runnable application list to the operating terminal 2 as the screen layout information of an initial screen.

Here, the runnable application list is defined in advance as follows in the screen layout setting unit 15.

### Examples of runnable applications

1) Run button of maintenance application 1 | execution file name
2) Run button of maintenance application 2 | execution file name
...
n) Run button of maintenance application n | execution file name

At this time, the operation/display unit 22 displays the runnable application list on the screen in the form of maintenance application run buttons, and when a button is pressed, transmits the execution file name corresponding to the button to the maintenance terminal 1 as the screen operation event information. The application screen operating unit 16, having received the execution file name, instructs the OS 20 to run the execution file.

Further, during the processing for specifying a single operation subject screen from the respective application screens displayed on the maintenance terminal 1, the screen specifying unit 11 may transmit information indicating the displayed application screens to the operation/display unit 22 via the screen information generating unit 14 as the screen layout information so that the operation/display unit 22 selects the operation subject application screen. Examples of methods of setting the screen layout information are as follows.

### Examples of methods of setting screen layout information

1) Window title 1 | screen ID | bitmap of thumbnail of screen
2) Window title 2 | screen ID | bitmap of thumbnail of screen
...
n) Window title n | screen ID | bitmap of thumbnail of screen

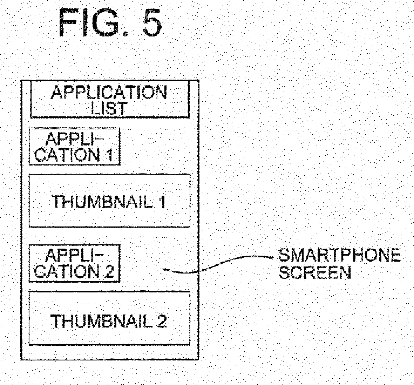

At this time, as shown in Fig. 5, the operation/display unit 22 displays a list of window titles and thumbnails of the corresponding screens on the screen of the operating terminal 2, and transmits the screen ID corresponding to the selected window title or thumbnail to the maintenance terminal 1. In response, the screen specifying unit 11 specifies the screen having the screen ID as the operation subject screen.

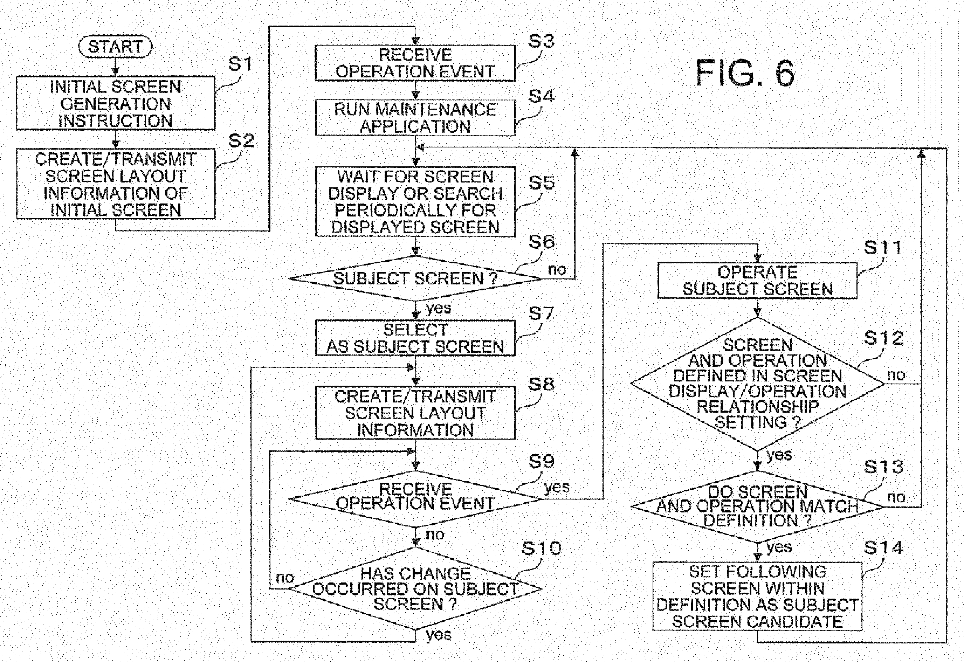

Next, referring to a flowchart shown in Fig. 6, processing executed by the maintenance terminal 1 of the remote control system according to the first embodiment of this invention will be described. The processing of Fig. 6 is executed at a desired timing set in advance or at an application run timing, for example.

In Fig. 6, first, the screen specifying unit 11 outputs the initial screen generation instruction to the screen information generating unit 14 (step S1), whereupon the screen information generating unit 14 generates the screen layout information of the initial screen and transmits the generated information to the operating terminal 2 (step S2).

Next, the application screen operating unit 16, having received the screen operation event information (step S3), runs the maintenance application (step S4) and then waits for a screen to be displayed or searches periodically for a displayed screen (step S5).

Next, when an application screen is displayed on the screen, the screen specifying unit 11 determines whether or not the application screen is an operation subject screen (step S6). When it is determined in step S6 that the application screen is not an operation subject screen (No), the routine returns to step S5.

When it is determined in step S6 that the application screen is an operation subject screen (Yes), on the other hand, the screen specifying unit 11 selects the screen as the operation subject screen (step S7), whereupon the screen information generating unit 14 generates the screen layout information and transmits the generated information to the operating terminal 2 (step S8).

Next, the application screen operating unit 16 determines whether or not the screen operation event information has been received (step S9). When it is determined in step S9 that the screen operation event information has not been received (No), the screen information generating unit 14 determines whether or not a change has occurred on the operation subject screen (step S10).

When it is determined in step S10 that a change has occurred on the operation subject screen (Yes), the routine returns to step S8. When it is determined in step S10 that a change has not occurred on the operation subject screen (No), on the other hand, the routine returns to step S9.

Further, when it is determined in step S9 that the screen operation event information has been received (Yes), the application screen operating unit 16 performs an operation on the operation subject screen (step S11).

Next, the screen specifying unit 11 determines whether or not the operation subject screen and the operation performed on the operation subject screen have been defined in the screen display/operation relationship setting unit 13 (step S12). When it is determined in step S12 that the operation subject screen and the operation performed thereon have not been defined in the screen display/operation relationship setting unit 13 (No), the routine returns to step S5.

When it is determined in step S12 that the operation subject screen and the operation performed thereon have been defined in the screen display/operation relationship setting unit 13 (Yes), on the other hand, the screen specifying unit 11 determines whether or not the operation subject screen and the operation performed on the operation subject screen match the definition (step S13). When it is determined in step S13 that the operation subject screen and the operation performed on the operation subject screen do not match the definition (No), the routine returns to step S5.

When it is determined in step S13 that the operation subject screen and the operation performed on the operation subject screen match the definition (Yes), on the other hand, the screen specifying unit 11 sets the following screen within the definition as an operation subject screen candidate (step S14), whereupon the routine returns to step S5.

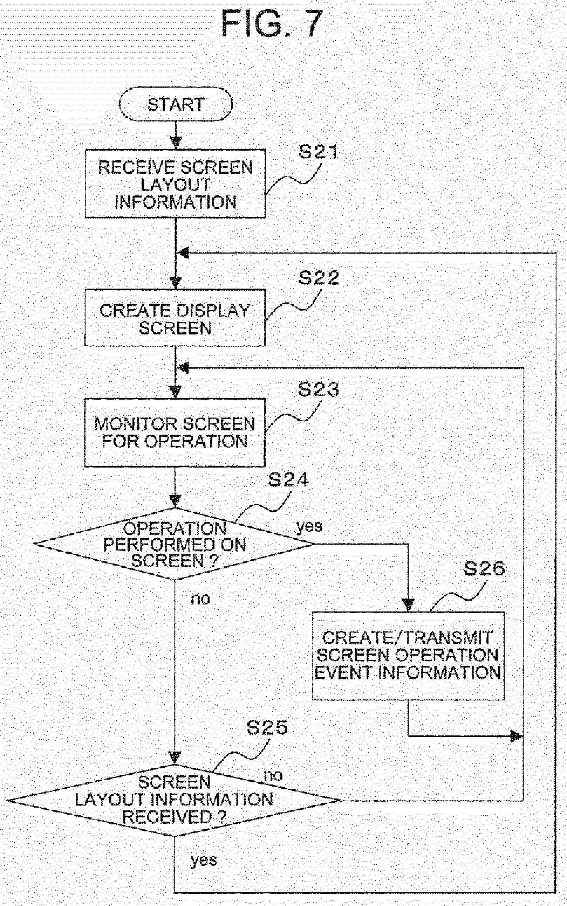

Next, referring to a flowchart shown in Fig. 7, processing executed by the operating terminal 2 of the remote control system according to the first embodiment of this invention will be described. The processing of Fig. 7 is executed at a desired timing set in advance or at an activation timing of the operating terminal 2, for example.

In Fig. 7, the operation/display unit 22 receives the screen layout information from the maintenance terminal 1 (step S21), generates and displays a display screen (step S22), and monitors the screen in order to detect an operation performed thereon (step S23).

Next, the operation/display unit 22 determines whether or not an operation has been performed on the screen (step S24). When it is determined in step S24 that an operation has not been performed on the screen (No), the operation/display unit 22 determines whether or not the screen layout information has been received (step S25).

When it is determined in step S25 that the screen layout information has been received (Yes), the routine returns to step S22. When it is determined in step S25 that the screen layout information has not been received (No), on the other hand, the routine returns to step S23.

When it is determined in step S24 that an operation has been performed on the screen (Yes), on the other hand, the operation/display unit 22 generates the screen operation event information and transmits the generated information to the maintenance terminal 1 (step S26), whereupon the routine returns to step S23.

As described above, the first embodiment includes the screen specifying unit that specifies a single operation subject screen from the respective application screens displayed on the screen of the maintenance terminal in accordance with the definition from the display/operation subject screen setting unit, the screen information generating unit that extracts screen components and a component conditions thereof from the operation subject screen specified by the screen specifying unit, generates the screen layout information on the basis of the screen components and the component conditions, and transmits the generated screen layout information to the operating terminal, and the operation/display unit that displays the screen components on the screen of the operating terminal on the basis of the screen layout information, monitors the screen components to detect an operation performed thereon, and when an operation is performed thereon, generates the screen operation event information and transmits the generated screen operation event information to the maintenance terminal.

Hence, when the maintenance terminal is operated remotely from the operating terminal, the visibility and operability of the maintenance application screen serving as the operation subject can be improved.

In other words, to operate an application displayed on a relatively large PC screen from a small smartphone screen, a single operation subject application screen is specified, and an operation subject screen component of the specified screen is displayed on the smartphone. In so doing, improvements in visibility and operability can be achieved when the application is viewed and operated from the smartphone.

## Claims

1. A remote control system in which a screen of a maintenance terminal is transmitted to and displayed on an operating terminal, and the maintenance terminal is operated on the basis of a screen operation event received from the operating terminal, wherein the maintenance terminal includes:
a screen specifying unit that specifies, in accordance with a definition from a display/operation subject screen setting unit, a single operation subject screen from respective application screens displayed on the screen of the maintenance terminal; and
a screen information generating unit that extracts screen components and component conditions thereof from the operation subject screen specified by the screen specifying unit, generates screen layout information on the basis of the screen components and the component conditions, and transmits the generated screen layout information to the operating terminal, and
the operating terminal includes an operation/display unit that displays the screen components on a screen of the operating terminal on the basis of the screen layout information, monitors the screen components to detect an operation performed thereon, and when an operation is performed thereon, generates screen operation event information and transmits the generated screen operation event information to the maintenance terminal.

2. The remote control system according to claim 1, wherein the screen specifying unit specifies an application screen that matches a window title defined by the display/operation subject screen setting unit as the operation subject screen.

3. The remote control system according to claim 1, wherein the screen specifying unit specifies an application screen that matches a window title and a window display process defined by the display/operation subject screen setting unit as the operation subject screen.

4. The remote control system according to claim 1, wherein the screen specifying unit specifies an application screen that matches a window title and the number of in-window screen components defined by the display/operation subject screen setting unit as the operation subject screen.

5. The remote control system according to any one of claims 1 to 4, wherein, in accordance with a screen display/operation relationship setting unit that defines an operation performed on the operation subject screen specified by the screen specifying unit and a screen serving as a following operation subject that results from the operation, the screen specifying unit sets the screen serving as the following operation subject as an operation subject screen candidate when the operation is performed.

6. The remote control system according to any one of claims 1 to 5, wherein the screen information generating unit, after transmitting the screen layout information to the operating terminal, monitors the operation subject screen for changes, and when a change occurs, generates new screen layout information and transmits the new screen layout information to the operating terminal.

7. The maintenance terminal according to any one of claims 1 to 6, the maintenance terminal being applied to a remote control system in which the screen of the maintenance terminal is transmitted to and displayed on an operating terminal, and the maintenance terminal is operated on the basis of a screen operation event received from the operating terminal.

8. The operating terminal according to any one of claims 1 to 6, the operating terminal being applied to a remote control system in which the screen of a maintenance terminal is transmitted to and displayed on the operating terminal, and the maintenance terminal is operated on the basis of a screen operation event received from the operating terminal.

9. A remote control method employed in a remote control system in which a screen of a maintenance terminal is transmitted to and displayed on an operating terminal, and the maintenance terminal is operated on the basis of a screen operation event received from the operating terminal, the remote control method comprising:
a screen specifying step for specifying, in accordance with a definition from a display/operation subject screen setting unit, a single operation subject screen from respective application screens displayed on the screen of the maintenance terminal;
a screen information generating step for extracting screen components and component conditions thereof from the operation subject screen specified in the screen specifying step, generating screen layout information on the basis of the screen components and the component conditions, and transmitting the generated screen layout information to the operating terminal; and
an operation/display step for displaying the screen components on a screen of the operating terminal on the basis of the screen layout information, monitoring the screen components to detect an operation performed thereon, and when an operation is performed thereon, generating screen operation event information and transmitting the generated screen operation event information to the maintenance terminal.
